# EUROPEAN PATENT SPECIFICATION

(11) **EP 1 063 472 B1**
(45) Date of publication and mention of the grant of the patent: **24.08.2005**
(21) Application number: 00112989.9
(22) Date of filing: 21.06.2000
(51) Int. Cl.: F23L 15/02, F24H 8/00, B01D 53/00

(54) **A method and an installation for cooling flue gases in the combustion of hydrogenous or moisture-containing fuels**
Ein Verfahren und eine Vorrichtung zur Kühlung von Rauchgasen bei der Verbrennung von wasserstoff- oder feuchtigkeitshaltigen Brennstoffen
Procédé et dispositif pour la réfrigération de gaz de fumée lors de l'incinération de combustibles contenant de l'hydrogene ou de l'humidité

(30) Priority: 23.06.1999 SV 9902399
(43) Date of publication of application: 27.12.2000
(73) Proprietor: Fagersta Energetics AB, 73740 FAGERSTA (SE)
(72) Inventor: Björling, Kjell, 737 49 Fagersta (SE); Wohta, Karlo, 770 20 Söderbärke (SE)
(74) Representative: Hytting, Kerstin Cecilia

(56) References cited:
- EP-A- 0 305 351
- WO-A-93/12386

## Description

### Field of invention

The present invention relates to a method for condensing flue gases in the combustion of hydrogenous or moisture-containing fuels, preferably in district heating plants. The flue gases are subjected to an initial cooling in a flue gas condenser which produces a condensate, and a subsequent cooling in a rotatable regenerative heat exchanger, having an air side through which combustion air to the combustion plant passes in one direction and a gas side through which the flue gas from the combustion plant passes in an opposite direction. The invention also relates to an installation for condensing flue gases.

### Background of invention

In district heating plants and central boiler plants, furnaces for combustion of different types of fuels, such as chippings, coal, peat, garbage, gas and oil, are used. When fuels containing hydrogen and/or water are burned, water vapour is generated in the flue gases. If the flue gases are cooled to temperatures under their dew point, the water vapour is partially condensed and the condensing heat may be utilised. The flue gases from the furnace thus are subjected to a condensing flue gas cooling, which means that the residual heat in the flue gases may be utilised in an effective manner in the form of condensation energy. At the same time there are demands that the flue gas shall be purified from acidificated and harmful substances which otherwise spread through the flue and/or sewage system to the surrounding environment.

A conventional system for flue gas cooling with return water from a district-heating network can extract condensation energy down to a flue gas temperature, which exceeds the temperature of the return water by just a few degrees. Usually this means that the flue gases reaches a temperature of about 55-60°, which implies that subsequent to condensing, the gases still contains about 15-20 vol-% of water vapour.

Swedish published application No. 458 800 describes a method, which provides effective heat exchange from a combustion process and simultaneously reduces the formation of nitric oxides, which cause acidification and undesired fertilisation in the surrounding environment, in the process. In the method disclosed, the flue gases, subsequent to an initial cooling and condensing, are cooled further by means of regenerative heat-exchange with the ingoing combustion air to the combustion process, so that water vapour condenses on the flue gas side and re-vaporises on the combustion air side, whereby both heat and water vapour are transferred from the flue gases to the combustion air.

The regenerative heat exchanger comprises a rotor, which by heat exchange further lowers both the temperature and the water content in the flue gases. The combustion air is heated and moistened simultaneously, resulting in that more energy may be transferred from the flue gases to the combustion air. In this way a saving of fuel, i.e. an increased effect, is achieved and also harmful flue gas-emission is reduced. The regenerative heat exchanger thus makes the cooling system more effective both from an energy saving and an environmental aspect.

Swedish published application No. 468 296 describes a process for achieving further improved energy exchange in regenerative heat exchange between combustion air and flue gases. This is achieved by sprinkling the surfaces of the heat exchanger's heat-transferring elements on the flue gas side with water, which results in that all of the vaporising capacity of the combustion air side may be utilised.

Ammonia is found naturally in flue gases due to the fact that the fuel's nitrogen content to a certain extent is converted to ammonia during combustion. To reduce the nitric oxide content, additional ammonia is added into the combustion system. Most of the ammonia is caught up in the condensate in the condensing of the flue gases and in these systems the ammonia content in the condensate, without purification, can reach up to 20-150 mg/l. In most cases such amounts lie far above the environmental requirements of today to be disposed directly out into the sewage system.

### The basic idea of the invention

The object of the invention is thus, in a system for condensing flue gases which comprises the advantageous regenerative heat exchange as described above, to reduce the ammonia content in the condensate so that the environmental requirements are fulfilled and the condensate may be disposed directly out into the sewage system.

According to the invention this is achieved by means of the characterising features as defined in the claims.

By feeding the condensate to the air side of the regenerative heat exchanger and spraying the condensate as a fine water mist, a film of water is formed on the surfaces of the rotable heat exchanger on the air side. This provides a maximised area from which ammonia may be expelled to the passing combustion air, which has been heated and saturated with moisture by the flue gases passing on the heat exchanger's gas side. The hot, ammonia-containing condensate from the flue gas condenser is sprinkled on the air side of the heat exchanger in such a manner that the ammonia-reduced or released residue condensate, which remains when the ammonia has been transformed to gas in the combustion air, may be collected at the inlet side of the air side and/or at the outlet side of the gas side. Thereby, the ammonia-reduced condensate residue is subjected to a temperature reduction, resulting in a gain in energy and also in that the collected ammonia-reduced or- released condensate may be disposed directly out into the sewage system due to the low temperature.

### Short description of the attached drawings

The invention will now be described in more detail below with reference to the accompanying drawings, in which
- Figure 1: illustrates schematically the principle of a system for flue gas cooling with regenerative heat exchange according to a conventional system;
- Figure 2: illustrates schematically a system according to the invention.

### Detailed description of a preferred embodiment of the invention

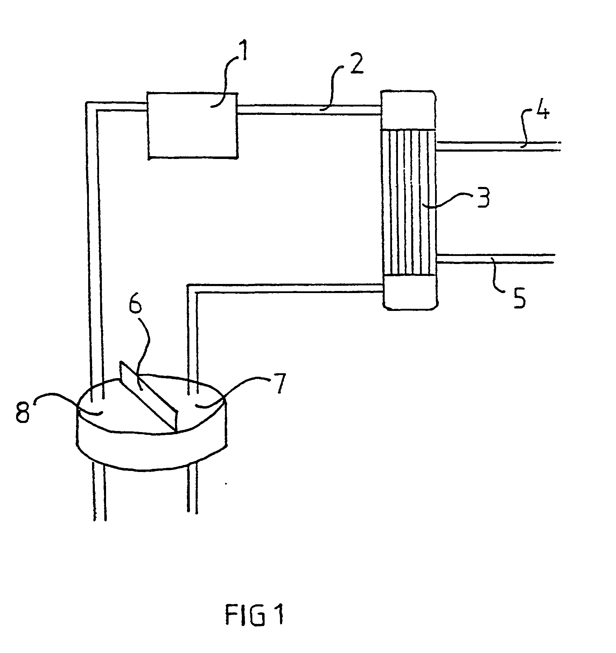

Figure 1 illustrates schematically an arrangement for condensing flue gases by means of regenerative heat exchange according to conventional technique. The arrangement comprises a furnace 1, from which the flue gases 2, containing for example about 30 % water vapour and having a temperature of about 150°C, are supplied to a first flue gas cooler 3. The flue gases are cooled in the flue gas cooler 3 to a temperature under or near their dew point, while the return water 5 from the district heating network is heated, for example from 55°C to 65°C, in outgoing line 4 from the flue gas cooler.

From the flue gas cooler 3, the flue gases 2, now containing a lower amount of water vapour, for instance about 15 %, are supplied to a regenerative heat exchanger 6, which comprises a rotor having vertically extending channels, with a gas side 7, through which the flue gas from the flue gas cooler 3 passes, and an air side 8, through which the combustion air to the furnace passes in an opposite direction. The flue gases which pass through the regenerative heat exchanger are thus further cooled, so that the water vapour condenses on the gas side 7 and re-vaporises on the air side 8 of the heat exchanger 6. The flue gas which continues out through the chimney now contains no or a small amount of water vapour, resulting in a reduction of effect-loss in the chimney. The heat and the water vapour, which are transferred from the flue gases to the combustion air, are supplied together with the combustion air to the furnace 1. The amount of water vapour in the combustion in the furnace has thus been increased, with the result that the flue gas leaving the furnace has a higher dew point. When the flue gas 2 is lead further into the flue gas cooler 3 an increased condensation is achieved and thus an increased heat delivery to the district heating network.

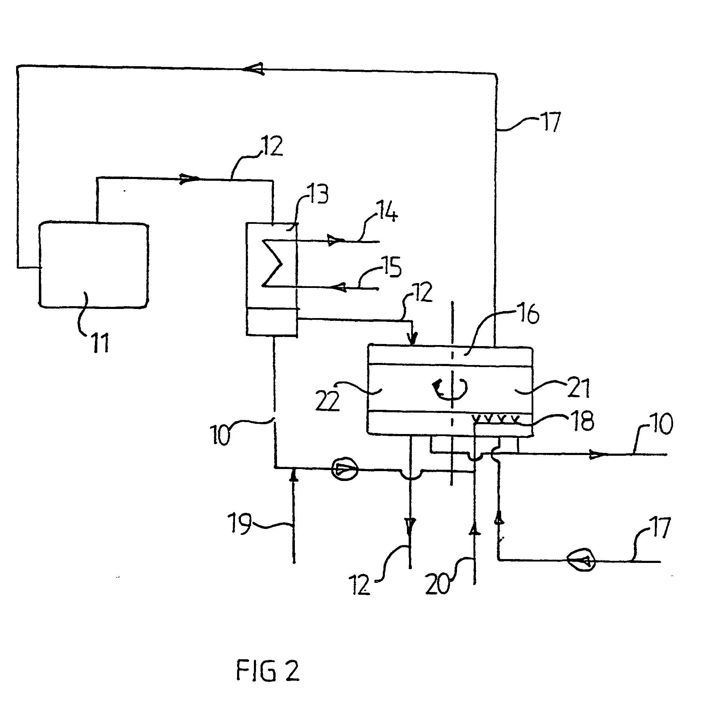

Figure 2 illustrates schematically an arrangement for condensing flue gases according to one embodiment of the present invention. In the same manner as that of the conventional system according to Figure 1, the flue gases 12 are lead from the combustion furnace 11 to a condenser or flue gas cooler 13 having outgoing pipes 14 and return pipes 15, respectively, to the district heating network. The flue gas is cooled in the condenser 13 and water is condensed.

Ammonia is present in the flue gases due to the fact that the nitrogen content of the fuel to a certain extent is converted to ammonia during combustion and due to the fact that it is specifically added to the combustion furnace to reduce the nitric oxide content. The ammonia in the ammonia-containing flue gases is collected by the contact with water solutions and is extracted as an ammonia-containing condensate 10 in the flue gas cooler 13. The condensate 10 thus has a content of ammonia, which according to current environmental demands, may be too high to allow the condensate to be disposed into the sewage system.

The flue gases 12 are lead from the condenser 13 to the regenerative heat exchanger 16, which in the same manner as in Figure 1, comprises a rotor having vertically extending channels with a gas side 22, through which the flue gas 12 passes, and an air side 21, through which the combustion air 17 passes in an opposite direction. In the illustrated embodiment the flue gases 12 are lead downwards from above through one half of the rotor and the combustion air 17 is supplied to the other half of the rotor, in an opposite direction to the direction of the flue gases. The flue gases contain a certain amount, for instance 10-20%, of water vapour and have a temperature of, for example, 45-55° C at the inlet side of the gas side, whilst the combustion air has a temperature of, for example, 20-25° C at the inlet side of the air side. Thus, the combustion air 17 is moistened and heated by the flue gas when passing through the heat exchanger.

The ammonia-containing condensate 10 is lead from the condenser 13 to the regenerative heat exchanger, optionally while a base 19 is added to heighten the pH-value to at least 8, preferably 10. The condensate 10, which has an elevated temperature of, for instance, 45-55° C, is supplied to spray nozzles 18, which preferably are directed upwards and arranged in the lower part of the heat exchanger and on its air side, i.e. at the inlet of the combustion air 17. By means of compressed air 20, the ammonia-containing condensate 10 is sprayed through the spray nozzles 18 in an upward direction, whereby a fine water mist is obtained. The water mist moistens the extensive, and in total, large heat exchange surfaces of the rotor and coats the channel surfaces with a film of water. The ammonia in the condensate is effectively expelled and transferred to the heated and moistened combustion air 17 which passes through the rotor on its air side. Due to the fact that the directions of the spraying and the combustion air are the same and that a thin film of water is formed on the extensive heat exchange surfaces of the rotor, the transfer becomes very effective and reaches over 70 %. This means that current purification demands can be easily fulfilled.

The ammonia-reduced or -released residual condensate 10 is collected at the inlet side of the air side 21 and/or at the outlet side of the gas side 22. The flow of the flue gas through the gas side of the rotor, influences and facilitates the releasing of residual condensate from the narrow channels of the heat exchanger. This implies that also the temperature of the condensate is reduced during its passage through the regenerative heat exchanger so that an outgoing condensate having a reduced temperature of about 25-30° C is obtained. The outgoing condensate may thus be disposed directly into the sewage system, which does not allow drainage water of high temperatures. The outgoing flue gas 12 from the rotor 16 has a low or non-existent content of water vapour and a temperature of about 25-30° C and can be lead further directly to the chimney. The ammonia-containing, heated and moistened flue gas 17 is lead further from the regenerative heat exchanger directly to the combustion furnace 11. Thus, the content of water vapour has been elevated in the combustion in the furnace, such that the dew point of the flue gas from the furnace is elevated. When the flue gas is led further into the flue gas cooler, an enhanced condensation is obtained and thereby an enhanced delivery of heat to the district heating network.

By applying the method of the installation according to Figure 2, it is achieved that an extraction of nitric oxide can be carried out with unlimited ammonia addition, whereby the desired nitric oxide reduction can be achieved. A further achievement is that the ammonia formed in the process and any optionally added surplus, which has not been used in the process by the nitric oxides, can be returned to the combustion furnace. The ammonia consumption in the arrangement is thus reduced.

The invention is in no way limited to the above-described embodiments and several conceivable modifications of the invention are possible within the scope of the claims. For example, the flue gas can be supplied to the regenerative heat exchanger in an upward direction, while the combustion air thus is supplied to the heat exchanger in opposite direction, i.e. in a downward direction.

## Claims

1. A method for condensing flue gases in the combustion of hydrogenous or moisture-containing fuels, preferably in district heating plants, in particular for reducing the ammonia content of the condensate,
wherein the flue gases (12) are subjected to an initial cooling in a flue gas condenser (13), which produces a condensate (10), and a subsequent cooling in a rotatable regenerative heat exchanger (16), having an air side through which combustion air (17) passes in one direction to the combustion plant (11) and a gas side (22) through which the flue gas (12) from the combustion plant (11) passes in an opposite direction, **characterised in that** the condensate (10) from the condenser (13) is supplied to the regenerative heat exchanger (16) and is sprayed on the air side (21) in the form of a water mist and is collected and guided to the sewage system from the inlet part of the air side (21) and/or the outlet part of the gas side (22) of the heat exchanger (16), and **in that** the ammonia content in the condensate (10) is reduced between the inflow and outflow of the condensate in the regenerative heat exchanger (16).

2. A method according to claim 1, **characterised in that** the temperature of the condensate (10) is reduced between the inflow and outflow of the condensate in the regenerative heat exchanger (16).

3. A method according to claim 1 or 2, **characterised in that** the combustion air (17) passes the air side (21) of the regenerative heat exchanger in an upward direction.

4. A method according to any one of claims 1-3, **characterised in that** the condensate (10) is sprayed on the air side through nozzles (18) by means of compressed air (20).

5. A method according to any one of claims 1-4, **characterised in that** the condensate (10) is supplied to the air side (21) of the heat exchanger in the same direction as the combustion air (17)

6. A method according to any one of the preceding claims, **characterised in that** the condensate forms a water film on the channel walls on the air side (21) of the regenerative heat exchanger (16), from which ammonia is expelled and transferred to the combustion air (17)

7. A method according to any one of the preceding claims, **characterised in that** the pH-value of the condensate (10) is increased to at least 8, preferably 10, before it is supplied to the regenerative heat exchanger (16).

8. An installation for condensing flue gases in the combustion of hydrogenous and moisture-containing fuels, preferably in district heating plants, in particular for reducing the ammonia content of the condensate, said installation comprising a flue gas condenser (13), in which the flue gases (12) from the combustion plant (11) are subjected to an initial condensing forming a condensate (10), and a rotatable regenerative heat exchanger (16) having a gas side (22) through which the flue gas (12) passes from the flue gas condenser (13) in a first direction, and an air side (21), through which combustion air (17) passes to the combustion plant (11) in an opposite direction, **characterised in that** the condensate (10) from the flue gas condenser (13) is supplied to the air side (21) of the regenerative heat exchanger through nozzles (18) which are essentially upwardly directed and arranged in the lower part of the regenerative heat exchanger (16).

9. An installation according to claim 8, **characterised in that** the flue gas (12) from the flue gas condenser (13) is arranged to pass through the gas side (22) of the rotor in a downward direction, whilst the combustion air (17) to the furnace is arranged to pass through the air side (21) of the rotor in an upward direction.

10. An installation according to claim 8 or 9, **characterised in that** the condensate (10) by means of compressed air supplied through the spray nozzles (18) is arranged to form a water mist on the air side (21) of the heat exchanger.

11. An installation according to claim 10, **characterised in that** the ammonia- and temperature-reduced condensate (10) is collected and guided to the sewage system from the inlet part of the air side (21) and/or the outlet part of the gas side (22) in the lower part of the heat exchanger.

12. An installation according to claim 11, **characterised in that** remaining residual condensate in the channels of the rotor on the gas side (22) is arranged to be released from the rotor by means of the flue gas flow and to be collected at the outlet part of the gas side (22)

## Patentansprüche

1. Verfahren zum Kondensieren von Rauchgasen bei der Verbrennung von wasserstoff- oder feuchtigkeitshaltigen Brennstoffen, vorzugsweise in Fernheizwerken, insbesondere zur Verringerung des Ammoniakgehalts des Kondensats, wobei die Rauchgase (12) einer ersten Kühlung in einem Rauchgaskondensator (13), der ein Kondensat (10) erzeugt, und einer anschließenden Kühlung in einem drehbaren regenerativen Wärmetauscher (16) unterliegen, der eine Luftseite, durch die die Verbrennungsluft (17) in einer Richtung zur Feuerungsanlage (11) strömt, und eine Gasseite (22) aufweist, durch die das Rauchgas (12) aus der Feuerungsanlage (11) in entgegengesetzter Richtung strömt,
**dadurch gekennzeichnet, dass**
das Kondensat (10) aus dem Kondensator (13) an den regenerativen Wärmetauscher (16) geliefert wird und auf der Luftseite (21) in Form eines Wasserschleiers aufgesprüht wird und gesammelt und von dem Einlassabschnitt der Luftseite (21) und/oder dem Auslassabschnitt der Gasseite (21) des Wärmetauschers (16) zum Abwassersystem geleitet wird, und dass der Ammoniakgehalt im Kondensat (10) zwischen dem Einfluss und dem Ausfluss des Kondensats in den regenerativen Wärmetauscher (16) verringert wird.

2. Verfahren nach Anspruch 1, **dadurch gekennzeichnet, dass** die Temperatur des Kondensats (10) zwischen dem Einfluss und dem Ausfluss des Kondensats in den regenerativen Wärmetauscher (16) verringert wird.

3. Verfahren nach Anspruch 1 oder 2, **dadurch gekennzeichnet, dass** die Verbrennungsluft (17) die Luftseite (21) des regenerativen Wärmetauschers in einer Aufwärtsrichtung durchströmt.

4. Verfahren nach einem der Ansprüche 1 bis 3, **dadurch gekennzeichnet, dass** das Kondensat (10) auf der Luftseite durch Sprühdüsen (18) mittels Druckluft (20) gesprüht wird.

5. Verfahren nach einem der Ansprüche 1 bis 4, **dadurch gekennzeichnet, dass** das Kondensat (10) auf die Luftseite (21) des Wärmetauschers in der gleichen Richtung wie die Verbrennungsluft (17) geliefert wird.

6. Verfahren nach einem der vorangehenden Ansprüche, **dadurch gekennzeichnet, dass** das Kondensat einen Wasserfilm auf den Kanalwänden der Luftseite (21) des regenerativen Wärmetauschers (16) bildet, aus dem Ammoniak herausgetrieben und zur Verbrennungsluft (17) übertragen wird.

7. Verfahren nach einem der vorhergehenden Ansprüche, **dadurch gekennzeichnet, dass** der pH-Wert des Kondensats (10) auf mindestens 8 erhöht wird, vorzugsweise 10, bevor es dem regenerativen Wärmetauscher (16) zugeführt wird.

8. Vorrichtung zum Kondensieren von Rauchgasen bei der Verbrennung von wasserstoff- und feuchtigkeitshaltigen Brennstoffen, vorzugsweise in Fernheizwerken, insbesondere zur Verringerung des Ammoniakgehalts des Kondensats, wobei die Vorrichtung einen Rauchgaskondensator (13) aufweist, in dem die Rauchgase (12) aus der Feuerungsanlage (11) einem ersten Kondensieren unterzogen werden, bei dem ein Kondensat (10) gebildet wird, und in einem drehbaren regenerativen Wärmetauscher (16) behandelt werden, der eine Gasseite (22) aufweist, durch die das Rauchgas (12) von dem Rauchgaskondensator (13) in einer ersten Richtung strömt, und eine Luftseite (21), durch die die Verbrennungsluft (17) zur Feuerungsanlage (11) in einer entgegengesetzten Richtung strömt,
**dadurch gekennzeichnet, dass**
das Kondensat (10) aus dem Rauchgaskondensator (13) der Luftseite (21) des regenerativen Wärmetauschers durch Sprühdüsen (18) zugeführt wird, die im wesentlichen aufwärts gerichtet und im unteren Abschnitt des regenerativen Wärmetauschers (16) angeordnet sind.

9. Vorrichtung nach Anspruch 8, **dadurch gekennzeichnet, dass** das Rauchgas (12) aus dem Rauchgaskondensator (13) derart angeordnet ist, dass es durch die Gasseite (22) des Rotors in einer Abwärtsrichtung strömt, wohingegen die Verbrennungsluft (17) zur Feuerung derart angeordnet ist, dass sie durch die Luftseite (21) des Rotors in einer Aufwärtsrichtung strömt.

10. Vorrichtung nach Anspruch 8 oder 9, **dadurch gekennzeichnet, dass** das Kondensat (10) mittels Druckluft, die durch die Sprühdüsen (18) geliefert wird, derart angeordnet ist, dass es einen Wasserschleier auf der Luftseite (21) des Wärmetausches bildet.

11. Vorrichtung nach Anspruch 10, **dadurch gekennzeichnet, dass** das ammoniak- und temperaturverringerte Kondensat (10) gesammelt und von dem Einlassabschnitt der Luftseite (21) und/oder dem Auslassabschnitt der Gasseite (22) im unteren Abschnitt des Wärmetauschers an das Abwassersystem geleitet wird.

12. Vorrichtung nach Anspruch 11, **dadurch gekennzeichnet, dass** das verbleibende Restkondensat in den Kanälen des Rotors auf der Gasseite (22) derart angeordnet ist, dass es von dem Rotor mittels des Rauchgasflusses abgelöst und am Auslassabschnitt der Gasseite (22) gesammelt wird.

## Revendications

1. Procédé destiné à condenser des gaz de fumée lors de la combustion de combustibles contenant de l'hydrogène ou de l'humidité, de préférence dans des installations de chauffage urbain, en particulier pour réduire la teneur en ammoniac du condensat, où les gaz de fumée (12) sont soumis à un refroidissement initial dans un condenseur de gaz de fumée (13), qui produit un condensat (10), et à un refroidissement ultérieur dans un échangeur de chaleur (16) à régénération pouvant être rotatif, comportant un côté air à travers lequel passe l'air de combustion (17) dans une direction en direction de l'installation de combustion (11) et un côté gaz (22) à travers lequel passe le gaz de fumée (12) provenant de l'installation de combustion (11) dans une direction opposée, **caractérisé en ce que** le condensat (10) provenant du condenseur (13) est fourni à l'échangeur de chaleur à régénération (16) et est pulvérisé du côté air (21) sous la forme d'un brouillard d'eau et est recueilli puis guidé vers le système d'évacuation des effluents depuis la partie d'entrée du côté air (21) et/ou la partie de sortie du côté gaz (22) de l'échangeur de chaleur (16) et **en ce que** la teneur en ammoniac dans le condensat (10) est réduite entre l'entrée et la sortie du condensat dans l'échangeur de chaleur à régénération (16).

2. Procédé selon la revendication 1, **caractérisé en ce que** la température du condensat (10) est réduite entre l'entrée et la sortie du condensat dans l'échangeur de chaleur à régénération (16).

3. Procédé selon la revendication 1 ou 2, **caractérisé en ce que** l'air de combustion (17) traverse le côté air (21) de l'échangeur de chaleur à régénération dans une direction vers le haut.

4. Procédé selon l'une quelconque des revendications 1 à 3, **caractérisé en ce que** le condensat (10) est pulvérisé du côté air au travers de buses (18) et au moyen d'air comprimé (20).

5. Procédé selon l'une quelconque des revendications 1 à 4, **caractérisé en ce que** le condensat (10) est fourni au côté air (21) de l'échangeur de chaleur dans la même direction que l'air de combustion (17).

6. Procédé selon l'une quelconque des revendications précédentes, **caractérisé en ce que** le condensat forme un film d'eau sur les parois de canaux du côté air (21) de l'échangeur de chaleur à régénération (16), à partir duquel l'ammoniac est expulsé et transféré vers l'air de combustion (17).

7. Procédé selon l'une quelconque des revendications précédentes, **caractérisé en ce que** la valeur de pH du condensat (10) est augmentée à au moins 8, de préférence 10, avant d'être fourni à l'échangeur de chaleur à régénération (16).

8. Installation destinée à condenser des gaz de fumée lors de la combustion de combustibles contenant de l'hydrogène et de l'humidité, de préférence dans des installations de chauffage urbain, en particulier pour réduire la teneur en ammoniac du condensat, ladite installation comprenant un condenseur de gaz de fumée (13) dans lequel les gaz de fumée (12) provenant de l'installation de combustion (11) sont soumis à une condensation initiale qui produit un condensat (10), et un échangeur de chaleur à régénération pouvant tourner (16) comportant un côté gaz (22) à travers lequel passe le gaz de fumée (12) provenant du condenseur de gaz de fumée (13) dans une première direction, et un côté air (21) à travers lequel passe l'air de combustion (17) en direction de l'installation de combustion (11) dans une direction opposée, **caractérisée en ce que** le condensat (10) provenant du condenseur de gaz de fumée (13) est fourni au côté air (21) de l'échangeur de chaleur à régénération par l'intermédiaire des buses (18) qui sont pratiquement dirigées vers le haut et agencées dans la partie inférieure de l'échangeur de chaleur à régénération (16).

9. Installation selon la revendication 8, **caractérisée en ce que** le gaz de fumée (12) provenant du condenseur de gaz de fumée (13) est agencé pour traverser le côté gaz (22) du rotor dans une direction vers le bas, tandis que l'air de combustion (17) en direction de l'installation de combustion est agencé pour traverser le côté air (21) du rotor dans une direction vers le haut.

10. Installation selon la revendication 8 ou 9, **caractérisée en ce que** le condensat (10) au moyen d'air comprimé fourni par l'intermédiaire des buses de pulvérisation (18) est agencé pour former un brouillard d'eau du côté air (21) de l'échangeur de chaleur.

11. Installation selon la revendication 10, **caractérisée en ce que** le condensat à teneur réduite en ammoniac réduite et à température réduite (10) est recueilli et guidé vers le système d'évacuation des effluents depuis la partie d'entrée du côté air (21) et/ou la partie de sortie du côté gaz (22) dans la partie inférieure de l'échangeur de chaleur.

12. Installation selon la revendication 11, **caractérisée en ce que** le condensat résiduel restant dans les canaux du rotor du côté gaz (22) est agencé pour être libéré du rotor au moyen de la circulation de gaz de fumée et pour être recueilli au niveau de la partie de sortie du côté gaz (22).
